# EUROPÄISCHE PATENTSCHRIFT

(11) **EP 1 053 902 B1**
(45) Veröffentlichungstag und Bekanntmachung des Hinweises auf die Patenterteilung: **27.04.2016**
(21) Anmeldenummer: 00110482.7
(22) Anmeldetag: 17.05.2000
(51) Int. Cl.: B60K 11/08, B62D 25/10

(54) **FAHRZEUG MIT WÄRMEQUELLE, WÄRMETAUSCHER UND ABDECKUNG**
VEHICLE WITH HEAT SOURCE, HEAT EXCHANGER UND COVER
VÉHICULE AVEC SOURCE CHAUDE, ÉCHANGEUR DE CHALEUR ET CAPOT

(30) Priorität: 21.05.1999 US 316200
(43) Veröffentlichungstag der Anmeldung: 22.11.2000
(73) Patentinhaber: Deere & Company, Moline, IL 61265 (US)
(72) Erfinder: Surridge, David Gayland, Garner, NC 27529 (US)
(74) Vertreter: Magin, Ludwig Bernhard

(56) Entgegenhaltungen:
- EP-A- 0 900 715
- EP-A- 0 906 863
- DE-C- 899 909
- US-A- 4 771 844
- US-A- 5 036 931
- US-A- 5 782 312

## Beschreibung

Die Erfindung betrifft ein Fahrzeug mit einer Wärmequelle, einem Wärmetauscher und einer Abdeckung, die die Wärmequelle zumindest bereichsweise umschließt und die zumindest eine Wand, die zu einer Längsachse des Fahrzeugs zumindest im wesentlichen quer angeordnet ist und in der zumindest eine Lufteinlaßöffnung vorgesehen ist, und eine erste und eine zweite Seitenwand aufweist, die zu der Längsachse zumindest im wesentlichen parallel ausgerichtet sind, mit wenigstens einem Abweiser den eintretenden Luftstrom von der Wärmequelle trennt und zu dem Wärmetauscher leitet.

Bekannte Hauben oder Abdeckungen an kleinen Fahrzeugen wie an Mähgeräten umschließen einen Verbrennungsmotor, ein Kühlsystem und andere Fahrzeugbaugruppen. Solche Fahrzeuge weisen üblicherweise flüssigkeitsgekühlte Verbrennungsmotoren auf, welche während ihres Betriebs Hitze erzeugen. Flüssigkeitsgekühlte Verbrennungsmotoren verwenden unter Druck stehendes Kühlmittel, das durch den Motor zirkuliert, um die Hitze zu absorbieren. Das erhitzte Kühlmittel wird nachfolgend durch einen Wärmetauscher wie einen Kühler geleitet, um Hitze aus dem Kühlmittel in die Atmosphäre abzuleiten, wonach das Kühlmittel zur weiteren Kühlung wieder durch den Motor geleitet wird. Wenn das Kühlmittel durch den Wärmetauscher geleitet wird, strömt Luft durch den Wärmetauscher, um die Hitze zu absorbieren und sie in die Atmosphäre zu leiten. Die Luft wird üblicherweise mittels eines Lüfters durch den Wärmetauscher gezogen oder getrieben.

Die US-A-4,341,277 zeigt eine Baumaschine mit einer einen Motorraum abdeckenden Haube, die an ihrer Oberseite Öffnungen aufweist, durch die ein Luftstrom eindringen kann, der mittels einer an der Haube vorgesehenen Leiteinrichtung zu einem Wärmetauscher geleitet wird.

Die US-A-4,771,844 zeigt ein Fahrzeug zur Rasenpflege mit einem Kühlsystem. Das Kühlsystem weiset hinter einem Fahrersitz einen nach vorn gerichteten Lufteinlass auf, der Luft über einen sich in Längsrichtung erstreckenden Kanal mit einem Stromumkehrer an einen nach rückwärts gerichteten Wärmetauscher liefert.

Die Druckschrift DE 899909 zeigt ein Fahrzeug mit einem ähnlichen Kühlsystem.

Die der Erfindung zugrunde liegende Aufgabe wird darin gesehen, bekannte Fahrzeuge mit Abdeckungen zu verbessern.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Abdeckung zur Verfügung gestellt, die die Wärmequelle zumindest im wesentlichen umschließt und somit vor Umwelteinflüssen wie der Witterung oder Verschmutzungen schützt und gleichzeitig einen Zustrom von kühler Luft zu dem Wärmetauscher gewährleistet. Bei der Wärmequelle handelt es sich vorzugsweise um einen Antrieb bzw. einen Verbrennungsmotor. Es kann sich über auch um jede andere Kolbenmaschine, eine Klimaanlage, einen Elektromotor etc. handeln. Die Wand, in der sich die Lufteinlaßöffnung befindet, ist zu der Längsachse des Fahrzeugs zumindest im wesentlichen quer angeordnet, so daß eine möglichst große Lufteinlaßfläche vorhanden ist. Der Abweiser trennt die Wärmequelle von dem eintretenden Luftstrom, wodurch einer Aufheizung der Luft durch die Wärmequelle entgegengewirkt wird, und dem Wärmetauscher kühle Luft zugeführt werden kann. Darüber hinaus leitet der Abweiser den Luftstrom in Richtung des Wärmetauschers, so daß ein gleichmäßiger, gerichteter Luftstrom entsteht. Hierzu kann der Abweiser innerhalb der Abdeckung angeordnet sein, so daß die durch die Lufteinlaßöffnung eintretende Luft zwischen dem Abweiser und der Wand und/oder zumindest einer der Seitenwände geführt wird, wodurch eine Aufheizung vermieden wird. Gleichzeitig kann durch den Abweiser durch die Wärmequelle erzeugter Lärm gedämpft werden. Erstreckt sich die Lufteinlaßöffnung zumindest bereichsweise in wenigstens eine der Seitenwände oder ist in zumindest einer der Seitenwände wenigstens eine weitere Lufteinlaßöffnung vorgesehen, so ergibt sich eine größere Lufteinlaßfläche, wodurch eine größere Menge an Luft zu dem Wärmetauscher gelangen bzw. durch den Lüfter angesaugt bzw. hindurchgedrückt werden kann. Die Wand ist in einem Heckbereich angeordnet und bildet zumindest einen wesentlichen Bereich des Fahrzeughecks.

Die Lufteinlaßöffnung kann offen ausgeführt sein, vorzugsweise ist sie aber zumindest bereichsweise abschirmbar vorgesehen, so daß ein unbeabsichtigtes Eingreifen einer Bedienungsperson oder anderer Personen verhindert wird und einem Eindringen von Verschmutzen entgegengewirkt wird. Hierzu kann über der Einlaßöffnung eine Art Grill oder auch eine gelochte Platte beispielsweise in der Art eines Lochblechs vorgesehen sein, die einen Zustrom von Luft ermöglicht.

Bildet der Abweiser mit zumindest einer der Seitenwände einen Luftleitkanal, so wird der Luftstrom in diesem geführt und die Luft kann nicht aus dem geschlossenen Kanal und so an dem Abweiser vorbeigelangen, wodurch einem Verlust von Luft an andere Bereiche innerhalb der Abdeckung entgegengewirkt wird.

Um dem Wärmetauscher eine größere Menge an Luft zuzuführen, kann ein Lüfter vorgesehen sein, der vorzugsweise als ein Radiallüfter ausgeführt ist, der Luft in Richtung des Wärmetauschers saugt oder diese durch den Wärmetauscher hindurchdrückt.

Einem Entweichen von Luft aus der Abdeckung bevor sie dem Wärmetauscher zugeführt wurde, kann entgegengewirkt werden, wenn zumindest zwischen der Abdeckung und dem Wärmetauscher eine Dichteinrichtung vorgesehen ist. Eine solche Dichteinrichtung kann beispielsweise in einfacher Weise als eine Dichtung ausgebildet sein, die an der Abdeckung oder an dem Wärmetauscher vorgesehen ist und mit einer Dichtfläche an dem jeweils anderen Bauteil zusammenwirken kann. Es können zu diesem Zweck auch weitere Dichtungen vorgesehen sein, so beispielsweise zwischen den Seitenwänden und dem Fahrzeug.

Die durch die Lufteinlaßöffnung eintretende Luft kann auch dazu verwendet werden, um der Wärmequelle selbst Luft zuzuführen, beispielsweise um einem Verbrennungsmotor Luft für einen Vergaser zur Verfügung zu stellen. Hierzu können Mittel vorgesehen sein, die den durch die Lufteinlaßöffnung eintretenden Luftstrom aufteilen, beispielsweise indem in dem Abweiser bzw. dem Luftleitkanal eine Öffnung vorgesehen ist, durch die ein Teil der Luft abgeleitet werden kann, um sie beispielsweise einem dem Vergaser vorgeordneten Luftfilter zuzuführen.

Die Zugänglichkeit des Wärmtauschers kann verbessert werden, indem der Wärmertauscher nicht direkt hinter der Wand angeordnet ist, sondern mit dieser einen Winkel einschließt.

Ist die Wand im wesentlichen vertikal ausgerichtet, so kann einem Ablagern bzw. Eindringen von Verschmutzen beispielsweise durch in der Umgebungsluft herumwirbelnde Partikel oder durch Niederschläge entgegengewirkt werden.

Die vorliegende Erfindung kann an landwirtschaftlichen oder industriellen Arbeitsfahrzeugen oder allgemein an sogenannten Off-Road-Fahrzeugen eingesetzt werden. Besonders günstig ist aber eine Verwendung an Fahrzeugen zur Rasen-, Garten- und Grundstückspflege, da diese Umgebungseinflüssen, wie aufgewirbeltem Schmutz oder Pflanzenabschnitten etc. ausgesetzt sind. Darüber hinaus sollen solche Fahrzeuge einfach, kompakt und robust sein. Es kann sich hierbei beispielsweise um Mähgeräte und insbesondere um Frontmähgeräte handeln, es kann aber auch der Einsatz an Kehrmaschinen und Schneefräsen vorgesehen sein.

In der Zeichnung ist ein nachfolgend näher beschriebenes Ausführungsbeispiel der Erfindung dargestellt. Es zeigt:
- Fig. 1: eine perspektivische Ansicht eines Frontmähers bzw. eines Fahrzeugs mit einer Abdeckung,
- Fig. 2: eine Teilansicht des Fahrzeugs von links, die einige Baugruppen zeigt, die von der Abdeckung umschlossen werden,
- Fig. 3: eine perspektivische Ansicht der Innenseite der Abdeckung,
- Fig. 4: eine perspektivische Ansicht der Abdeckung, wobei deren Lufteinlaßöffnungen nicht abgeschirmt dargestellt sind,
- Fig. 5: eine Teilansicht des Fahrzeugs, die einen Luftstrom durch die Lufteinlaßöffnung zu einem von der Haube umschlossenen Wärmetauscher darstellt,
- Fig. 6: eine Teilansicht des Fahrzeugs, die verschiedene Bauteile eines Kühlsystems des Fahrzeugs darstellt.

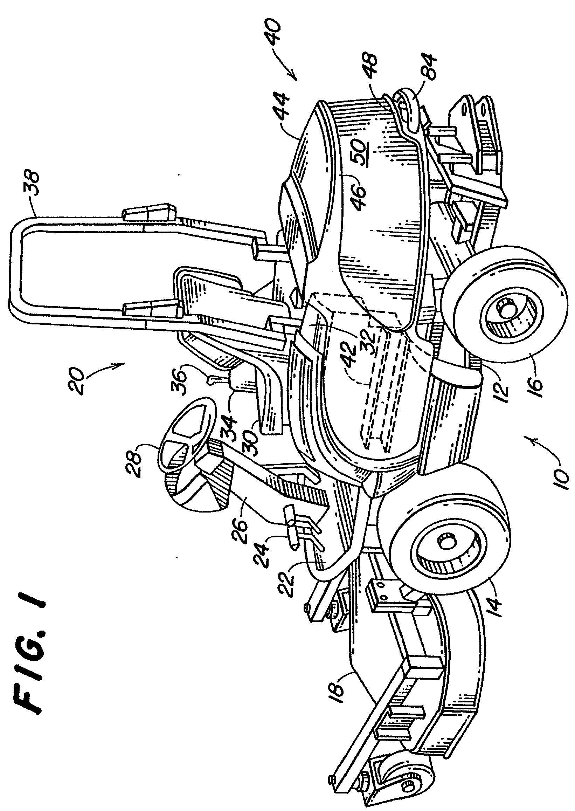

Ein Frontmähgerät bzw. ein Fahrzeug 10, an welchem die vorliegende Erfindung verwendet werden kann, wird im allgemeinen in Figur 1 dargestellt. Das Fahrzeug 10 weist einen Rahmen 12 auf, der von vorderen, antreibbaren Rädern 14 und rückwärtigen, lenkbaren Rädern 16 getragen wird. An einem Frontbereich des Fahrzeugs 10 ist ein Mähwerk 18 angebracht. Der Rahmen 12 trägt eine Bedienerplattform 10 an seinem vorderen Endbereich mit einer Plattform 22 mit Pedalen 24, die sich aufwärts durch diese hindurch erstrecken, eine nach obenstehende Lenksäule 26, welche ein Lenkrad 28 trägt, und einen Bedienersitz 30. An der linken Seite des Bedienersitzes 30 ist ein Kraftstofftank 32 angeordnet, während an der rechten Seite der Bedienerplattform 20 eine Konsole 34 mit Handbedienungseinrichtungen 36 vorgesehen ist. Rückwärts des Bedienersitzes 30 ist ein faltbarer Überrollschutz 38 angeordnet. Eine Haube bzw. eine Abdeckung 40, die an dem Kraftstofftank 32 und an der Konsole 34 in Längsrichtung verschiebbar angebracht ist, umschließt die rückwärtigen und seitlichen Bereiche des Fahrzeugs 10. Ein Verschieben der Abdeckung 40 zwischen einer vorderen, geschlossenen Stellung und einer rückwärtigen, offenen Stellung wird durch ein Vorsehen einer Führungseinrichtung 42 ermöglicht. Die Abdeckung 40 weist einen oberen Bereich 44, Seitenwände 46 und einen rückwärtigen Bereich bzw. eine Wand 48 auf. In der rückwärtigen Wand der Abdeckung 40 ist ein ausgeschnittener, abgeschirmter Bereich in der Art eines Grills bzw. einer Lufteinlaßöffnung 50 vorgesehen, der Bereiche der Seitenwände 46 und der ersten Wand 48 umfaßt und es Kühl- und Vergaserluft gestattet hindurchzutreten.

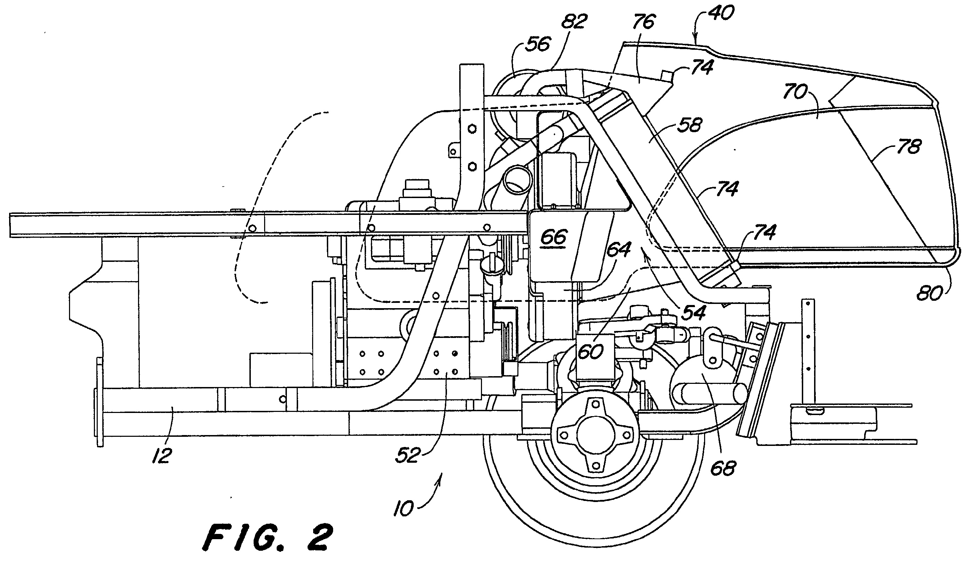

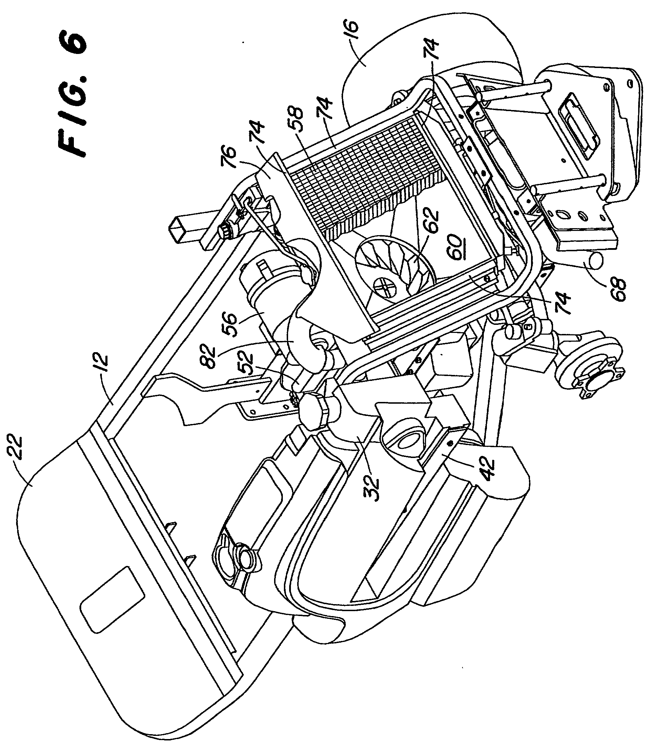

Es wird nun Figur 2 betrachtet, in der eine seitliche Teilansicht des Fahrzeugs und von Baugruppen, die unter und innerhalb der Abdeckung 40, die in unterbrochenen Linien dargestellt ist, gezeigt werden. Diese Ansicht illustriert einen Bauraum, der durch die Abdeckung 40, in der ein Verbrennungsmotor bzw. eine Wärmequelle 52, ein Kühlsystem 54 und ausgewählte andere Fahrzeugbaugruppen wie Steuergestänge angeordnet sind. Die Wärmequelle 52 ist in einem mittleren Bereich des Fahrzeugs 10 gerade vor den rückwärtigen Rädern 16 angeordnet. Ein Luftfilter 56 ist oberhalb der Wärmequelle 52 angeordnet, um der Wärmequelle 52 Vergaserluft zur Verfügung zu stellen. Das Kühlsystem 54 weist einen Kühler bzw. einen Wärmetauscher 58 auf, welcher am Umfang eines Lufteinlaßkanals 60 angeordnet ist. Der Lufteinlaßkanal 60 transportiert Luft zu einem radialen Lüfter 62 (in Figur 6 gezeigt), welcher in einem Lüftergehäuse 64 zwischen der Wärmequelle 52 und dem Wärmetauscher 58 angeordnet ist. Der Lüfter 62 zieht Luft aus einem vorderen Bereich des Bauraums an, der durch die Abdeckung 40 eingeschlossen wird, um durch die Wärmequelle 52 aufgeheizte Luft, wie auch Luft aus einer rückwärtigen Richtung, welche durch den Wärmetauscher 58 hindurchgelangt, abzugeben. Die durch den Lüfter 62 angezogene Luft wird durch das Lüftergehäuse 64 über linke und rechte Auslaßkanäle 66 abgegeben, wobei der linke Auslaßkanal 66 in Figur 2 teilweise dargestellt ist. Die Auslaßkanäle 66 können auch eine nach unten und rückwärts gerichtete Erweiterung, welche nicht in Figur 2 gezeigt wird, aufweisen, um die Luft direkter über einen Auspufftopf 68 zu verteilen, der am Heck des Fahrzeugs 10 angeordnet ist, um diesen zu kühlen und um einer Ansammlung von Grasabschnitten und verschiedenen Verschmutzungen angrenzend an den Auspufftopf 68 entgegenzuwirken.

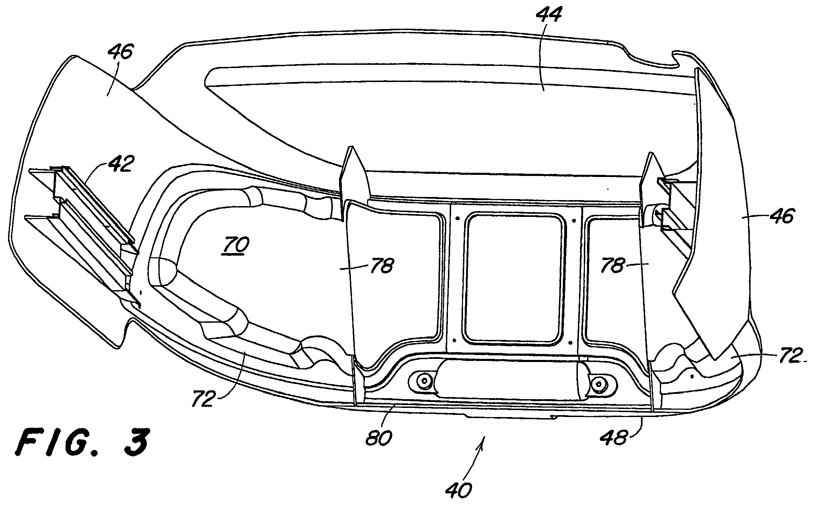

Es wird nun auf die Figuren 2, 3 und 4 Bezug genommen, welche die Abdeckung 40 in verschiedenen Perspektiven zeigen, wobei die Abdeckung 40 zurückgesetzte Abweiser 70 auf beiden Seitenwände 46 der Abdeckung 42 aufweist. Die Abweiser 70 fluchten mit den Ausschnitten, welche in Form von Grills bzw. Lufteinlaßöffnungen 50 ausgeführt sind, und weisen Seitenwände 72 auf, welche den Kühlungsluftstrom von dem Inneren des Bauraums, der durch die Abdeckung 40 definiert wird, isolieren. Dichtungen 74 sind um den Umfang des Wärmetauschers 58 vorgesehen, so daß die Abdeckung, wenn sie während eines normalen Betriebs des Fahrzeugs 10 geschlossen ist, gegen eine Ansaugfläche des Wärmetauschers 58 dichtet. Die Dichtung 74 an der Oberseite des Wärmetauschers 58 ist mit einer keilförmigen Absperreinrichtung 76 verbunden, die an der Oberseite des Wärmetauschers 58 angebracht ist. Die Dichtungen 74 an den Seiten des Wärmetauschers 58 liegen an Dichtflächen an, die durch die rückwärtigen Kanten 78 der Abweiser 70 zur Verfügung gestellt werden, und die untere Dichtung 74 liegt an einer sich nach innen erstreckenden unteren Kante 80 der rückwärtigen Wand 48 der Abdeckung 40 an. In der Zwischenzeit wird die obere Dichtung 74 an der Absperreinrichtung gegen das Innere des oberen Bereichs 44 der Abdeckung dichten.

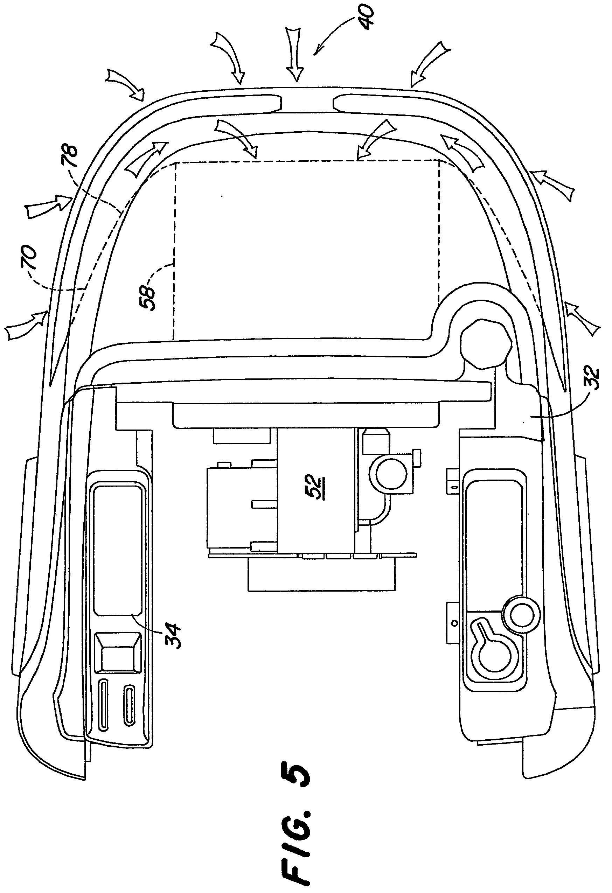

Eine Teilansicht des Fahrzeugs 10 illustriert den Luftstrom, der durch die Abweiser 70 der Abdeckung 40 gelenkt wird und durch Lufteinlaßöffnung 50 gelangt, wie es in Figur 5 dargestellt wird. Kühlluft wird durch die Lufteinlaßöffnung 50 von beiden Seitenwänden 46 angezogene, wie auch durch die rückwärtige Wand 48 der Abdeckung 40. Während eines Betriebs des Fahrzeugs 10, wird durch den Lüfter 62 angezogenen Luft in die Lufteinlaßöffnung 50 eintreten und in Strömen entlang von durch den Abweiser 70 und die Seitenwände 72 gebildete Passagen bzw. Luftleitkanäle, die durch die Pfeile in Figur 5 gezeigt werden, fließen. Die Abweiser 70 lenken durch den Lüfter 62 angezogene Luft zu dem Heck des Fahrzeugs 10, wo die Abweiser 70 enden und die Luft in einen offenen Bereich hinter den Wärmetauscher 58 gelenkt wird. Während der Hauptteil von durch den Lüfter 62 angezogener Luft durch den Wärmetauscher 58 gelangt, kann Luft für andere Zwecke abgeteilt werden, so für den Vergaser oder um durch einen Ölkühler (nicht gezeigt) zu gelangen oder für andere zusätzliche Wärmetauscher. In der bevorzugten Ausführungsform weist die Absperreinrichtung 76 eine Vergaserluftöffnung auf, welche mit dem Luftfilter 56 eines Antriebslufteinlaßes 82 verbunden ist.

Vorzugsweise ist die Abdeckung 40 ein einteiliges Element aus einem Kunststoffverbundwerkstoff hergestellt durch einen Rotationsformprozeß, so daß die Abweiser 70 zusammen mit diesem gebildet werden können. Eine Reduzierung der Teilezahl spiegelt eine Kostenersparnis wieder und vereinfacht den Zusammenbauvorgang des Fahrzeugs 10. Ebenso wird die Anzahl an Verbindungen in dem Kühlsystem 54, welche ein Dichten erfordern, um die Kühlluft zu übertragen, verringert.

Die Abweiser 70 können weiter dazu dienen, Lärm, der durch die Wärmequelle 52 hervorgerufen wird, aufzunehmen und ihn von einer Bedienungsperson wie auch gegenüber solchen zu isolieren, welche sich während des Betriebs des Fahrzeugs 10 in der Nähe aufhalten. Dies wird durch die Abweiser 70 erreicht, da sie bestimmte Antriebsgeräusche dämpfen, bevor sie aus der Abdeckung 40 hinausgelangen.

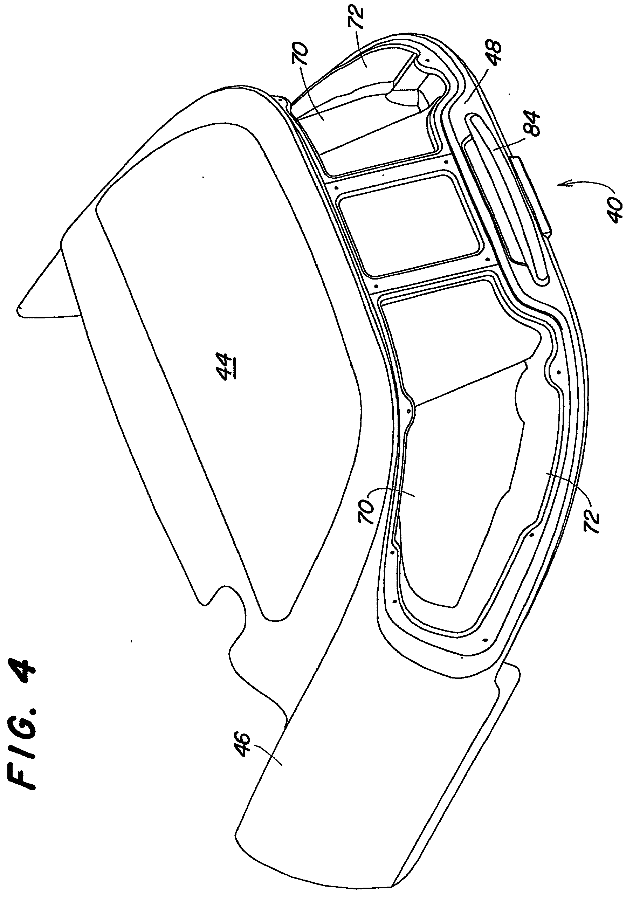

Wenn das Fahrzeug 10 betrieben wird, wird die Abdeckung 40 ihre geschlossene Stellung, wie sie in Figur 1 gezeigt wird, einnehmen, und eine Verriegelungseinrichtung, die zwischen der Abdeckung 40 und dem Fahrzeug 10 angebracht ist, wird sie in ihrer geschlossenen Stellung halten. Wenn ein Zugang zu der Wärmequelle 52, dem Kühlsystem 54 und/oder anderen Baugruppen, die in dem Bauraum angeordnet sind, gewünscht wird, wird die Verriegelungseinrichtung gelöst und die Abdeckung 40 kann manuell nach rückwärts verschoben werden, wie es in Figur 2 dargestellt ist, wobei die Dichtungen 74 von den Dichtflächen der Abdeckung 40 gelöst werden. Ein Griff 84 (in Figur 4 dargestellt) ist vorgesehen, um ein Verschieben der Abdeckung 40 zu vereinfachen.

Es wird nun Figur 6 betrachtet, in der eine erhöhte, perspektivische Teilansicht des Fahrzeugs 10 von rückwärts und links gezeigt wird, die verschiedene Baugruppen des Kühlsystems 54 zeigt. Der radiale Lüfter 62 ist mit einer Auslaßfläche des Wärmetauschers 58 über den Lufteinlaßkanal 60 verbunden. Das Lüftergehäuse 64 weist vorzugsweise eine vordere Aussparung auf, so daß der Lüfter 62 von der Wärmequelle 52 erhitzte Luft von dem vorderen Bereich des Bauraums, in dem die Wärmequelle 52 angeordnet ist, wie auch kühlende Luft durch den Wärmetauscher 58, wie es mit Bezug auf Figur 5 beschrieben wurde, abzieht.

Mit der vorliegenden Erfindung wird eine Haubenstruktur bzw. eine Abdeckung 40 zur Verfügung gestellt, die einen Hauptbereich der Wärmequelle 52 und des Kühlsystems 54 des Fahrzeugs 10 umschließt. Die Abdeckung 40 weist abgeschirmte Lufteinlaßöffnungen 50 an mehr als einer Seite der Abdeckung 40 auf, die es Luft gestatten durch das Kühlsystem 54 und die Wärmequelle 52 zu gelangen. Durch die Verwendung eines Kunststoffverbundmaterials für die Herstellung der Abdeckung 40, werden Abweiser 70 in Eingriff mit den abgeschirmten Lufteinlaßöffnungen 50 gebildet, so daß der Grill bzw. die Lufteinlaßöffnung 50 über mehr als einen Bereich der Haube oder Abdeckung 40 ausgedehnt werden kann, während Luft durch einen zentralen Bereich gefördert wird, in dem die Abdeckung 40 gegen den Wärmetauscher 58 abgedichtet ist. Die Luft wird dadurch genötigt, durch den Wärmetauscher 58 zu gelangen, um die Wärmequelle 52 zu kühlen oder sie wird aufgeteilt, um bei anderen Fahrzeuganwendungen, wie bei einer Verbrennung eingesetzt zu werden.

Obwohl die Erfindung mit Bezug auf die dargestellte Ausführungsform gezeigt ist, wird es für den Fachmann klar sein, daß die Erfindung in der beschriebenen Form vorteilhaft sein kann, wenn sie zur Verwendung in anderen Anwendungsfällen verändert wird. Die vorliegende Erfindung soll nicht auf die zuvor beschriebene Ausführungsform beschränkt sein, sondern sie soll ausschließlich durch die folgenden Ansprüche begrenzt werden.

## Patentansprüche

1. Fahrzeug (10) mit einer Wärmequelle (52), einem Wärmetauscher (58) und einer Abdeckung (40), die die Wärmequelle (52) zumindest bereichsweise umschließt und die zumindest eine Wand (48), die zu einer Längsachse des Fahrzeugs (10) zumindest im wesentlichen quer angeordnet ist und in der zumindest eine Lufteinlaßöffnung (50) vorgesehen ist, und eine erste und eine zweite Seitenwand (46) aufweist, die zu der Längsachse zumindest im wesentlichen parallel ausgerichtet sind, mit wenigstens einem Abweiser (70), der den eintretenden Luftstrom von der Wärmequelle trennt und zu dem Wärmetauscher (58) leitet, **dadurch gekennzeichnet, daß** die Wand (48) zumindest einen wesentlichen Bestandteil des Hecks des Fahrzeugs (40) bildet und sich die Lufteinlaßöffnung (50) zumindest bereichsweise in wenigstens eine der Seitenwände (46) erstreckt.

2. Fahrzeug nach Anspruch 1, **dadurch gekennzeichnet, daß** die Lufteinlaßöffnung (50) wenigstens bereichsweise abschirmbar ist.

3. Fahrzeug nach einem oder mehreren der vorherigen Ansprüche, **dadurch gekennzeichnet, daß** der Abweiser (50) vorzugsweise mit zumindest einer der Seitenwände (46) einen Luftleitkanal bestimmt.

4. Fahrzeug nach einem oder mehreren der vorherigen Ansprüche, **gekennzeichnet durch** einen Lüfter (62), der mit dem Wärmetauscher (58) wirksam verbunden ist, und der vorzugsweise als ein Radiallüfter ausgeführt ist.

5. Fahrzeug nach einem oder mehreren der vorherigen Ansprüche, **dadurch gekennzeichnet, daß** zwischen der Abdeckung (40) und dem Wärmetauscher (58) eine Dichteinrichtung vorgesehen ist.

6. Fahrzeug nach einem oder mehreren der vorherigen Ansprüche, **dadurch gekennzeichnet, daß** Mittel vorgesehen sind, die einen durch die Lufteinlaßöffnung (50) eintretenden Luftstrom aufteilen.

7. Fahrzeug nach einem oder mehreren der vorherigen Ansprüche, **dadurch gekennzeichnet, daß** der Wärmetauscher (58) mit der Wand (48) einen Winkel einschließt.

8. Fahrzeug nach einem oder mehreren der vorherigen Ansprüche, **dadurch gekennzeichnet, daß** die Wand (48) zumindest im wesentlichen vertikal ausgerichtet ist und.

9. Verwendung eines Fahrzeugs (10) nach einem oder mehreren der vorherigen Ansprüche zur Rasen-, Garten- und Grundstückspflege.

## Claims

1. Vehicle (10) with a heat source (52), a heat exchanger (58) and a cover (40) which encloses the heat source (52) at least in regions and which has at least one wall (48), which is arranged at least substantially transversely with respect to a longitudinal axis of the vehicle (10) and in which at least one air inlet opening (50) is provided, and a first and a second side wall (46) which are arranged at least substantially parallel to the longitudinal axis, with at least one deflector (70) which separates the entering air flow from the heat source and conducts said air flow to the heat exchanger (58), **characterized in that** the wall (48) forms at least one substantial constituent part of the rear of the vehicle (40), and the air inlet opening (50) extends at least in regions into at least one of the side walls (46).

2. Vehicle according to Claim 1, **characterized in that** the air inlet opening (50) can be shielded at least in regions.

3. Vehicle according to one or more of the preceding claims, **characterized in that** the deflector (50) preferably together with at least one of the side walls (46) defines an air-guiding duct.

4. Vehicle according to one or more of the preceding claims, **characterized by** a fan (62) which is effectively connected to the heat exchanger (58) and which is preferably designed as a radial fan.

5. Vehicle according to one or more of the preceding claims, **characterized in that** a sealing device is provided between the cover (40) and the heat exchanger (58).

6. Vehicle according to one or more of the preceding claims, **characterized in that** means are provided which divide up an air flow entering through the air inlet opening (50).

7. Vehicle according to one or more of the preceding claims, **characterized in that** the heat exchanger (58) encloses an angle with the wall (48).

8. Vehicle according to one or more of the preceding claims, **characterized in that** the wall (48) is oriented at least substantially vertically and.

9. Use of a vehicle (10) according to one or more of the preceding claims for lawn, garden and estate care.

## Revendications

1. Véhicule (10) avec une source de chaleur (52), un échangeur de chaleur (58) et un capot (40), qui entoure au moins localement la source de chaleur (52) et qui présente au moins une paroi (48), qui est disposée au moins essentiellement transversalement à un axe longitudinal du véhicule (10) et dans laquelle il est prévu au moins une ouverture d'entrée d'air (50), et une première et une deuxième parois latérales (46), qui sont orientées au moins essentiellement parallèlement à l'axe longitudinal, avec au moins un déflecteur (70) qui sépare le courant d'air entrant de la source de chaleur et le conduit à l'échangeur de chaleur (58), **caractérisé en ce que** la paroi (48) forme au moins un composant essentiel de l'arrière du véhicule (40) et l'ouverture d'entrée d'air (50) s'étend au moins en partie dans au moins une des parois latérales (46).

2. Véhicule selon la revendication 1, **caractérisé en ce que** l'ouverture d'entrée d'air (50) peut être obturée au moins localement.

3. Véhicule selon une ou plusieurs des revendications précédentes, **caractérisé en ce que** le déflecteur (50) détermine un canal de guidage d'air de préférence avec au moins une des parois latérales (46).

4. Véhicule selon une ou plusieurs des revendications précédentes, **caractérisé par** un ventilateur (62), qui est activement relié à l'échangeur de chaleur (58) et qui est de préférence constitué par un ventilateur radial.

5. Véhicule selon une ou plusieurs des revendications précédentes, **caractérisé en ce qu'**il est prévu un dispositif d'étanchéité entre le capot (40) et l'échangeur de chaleur (58).

6. Véhicule selon une ou plusieurs des revendications précédentes, **caractérisé en ce qu'**il est prévu des moyens qui divisent un courant d'air pénétrant par l'ouverture d'entrée d'air (50).

7. Véhicule selon une ou plusieurs des revendications précédentes, **caractérisé en ce que** l'échangeur de chaleur (58) forme un angle avec la paroi (48).

8. Véhicule selon une ou plusieurs des revendications précédentes, **caractérisé en ce que** la paroi (48) est orientée au moins essentiellement en direction verticale et.

9. Utilisation d'un véhicule (10) selon une ou plusieurs des revendications précédentes pour l'entretien de gazon, de jardins et de parcelles de terrain.
